# EUROPÄISCHE PATENTSCHRIFT

(11) **EP 3 003 679 B1**
(45) Veröffentlichungstag und Bekanntmachung des Hinweises auf die Patenterteilung: **31.07.2019**
(21) Anmeldenummer: 14727530.9
(22) Anmeldetag: 02.06.2014
(51) Int. Cl.: B29C 45/16, B29C 45/26

(54) **SPRITZGIESSVORRICHTUNG**
INJECTION MOLDING DEVICE
DISPOSITIF DE MOULAGE PAR INJECTION

(30) Priorität: 06.06.2013 CH 10742013
(43) Veröffentlichungstag der Anmeldung: 13.04.2016
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2014/061365
(87) Internationale Veröffentlichungsnummer: WO 2014/195263

(56) Entgegenhaltungen:
- EP-A1- 0 058 947
- EP-A2- 1 782 936
- WO-A1-2007/082394
- WO-A1-2013/001022
- JP-A- 2006 035 667
- US-A- 3 820 930

## Beschreibung

Die vorliegende Erfindung liegt auf dem Gebiet der Spritzgiessvorrichtungen, insbesondere Spritzgiessvorrichtungen zum Spritzgiessen von Kunststoff.

Aus dem Stand der Technik sind Spritzgiessvorrichtungen bekannt, welche eine erste Formhälfte und eine gegenüber der ersten Formhälfte linear verschiebbare zweite Formhälfte aufweisen. Zwischen der ersten und der zweiten Formhälfte ist eine dritte mittlere Formhälfte (Mittelteil) angebracht, welche mit Bezug auf die erste und die zweite Formhälfte ebenfalls in derselben Richtung linear verschiebbar angeordnet ist. Ein Koordinationsmechanismus bewirkt, dass die dritte mittlere Formhälfte beim Öffnen und Schliessen der Spritzgiessvorrichtung mittig zwischen der ersten und der zweiten Formhälfte angeordnet ist und koordiniert zu diesen bewegt wird.

Die erste und die dritte Formhälfte wirken zusammen im Bereich einer ersten Trennebene und die zweite und die dritte Formhälfte im Bereich einer zweiten Trennebene (auch Trennebene genannt) zur Bildung von Kavitäten in welche z.B. geschmolzener Kunststoff zur Herstellung von Spritzgiessteilen eingespritzt wird. In der Regel sind mehrere Kavitäten pro Trennebene zur Steigerung der Effizienz vorhanden.

Weiterhin ist ein Transfersystem vorhanden, mittels dem in der ersten Trennebene hergestellte Spritzgiessteile bei geöffneter Spritzgiessvorrichtung aus ihren Kavitäten herausgehoben, um die mittlere Formhälfte herum in die zweite Trennebene und dort in Kavitäten der zweiten Trennebene eingebracht werden können.

Aus dem Stand der Technik sind verschiedene solche Vorrichtungen bekannt. Diese werden nachfolgend kurz erläutert.

EP0070189 wurde 1984 im Namen der Sumitomo Heavy Industries publiziert und betrifft eine Spritz-Blasformvorrichtung mit einem drehfest angeordneten Mittelteil. Ein Transfersystem ist unten und oben am Mittelteil drehbar gelagert. Es dient dazu, Teile, welche in einer ersten Trennebene durch Spritzgiessen hergestellt wurden, in eine zweite Trennebene zu bewegen, wo sie durch Blasformen umgeformt werden. Das Transfersystem ist Teil der Spritzgiessvorrichtung und verbleibt während dem Herstellen der Teile bei geschlossener Vorrichtung im Innern desselben.

EP1174242 wurde 2002 im Namen der Fa. Hekuma GmbH publiziert und zeigt eine Spritzgiessvorrichtung der eingangs erwähnten Art mit einer ausserhalb angeordneten Transfervorrichtung, welche von aussen her zwischen die beiden Trennebenen einfährt.

DE10121691 wurde 2002 im Namen der Fa. Zahoransky Formenbau GmbH veröffentlicht. Beschrieben wird eine Spritzgiessvorrichtung der eingangs beschriebenen Art. Das Transfersystem basiert auf einem um die mittlere Formhälfte angeordneten Kettenantrieb mit zwei Ketten, welche um zwei Drehachsen umlaufen und die Teile parallel zu den beiden Kavitätenhälften umfassenden Seitenflächen der mittleren Formhälfte bewegen. Die Ketten sind in zwei parallel angeordneten Schlitzen angeordnet. Die hergestellten Teile bleiben beim Transfer an einem beweglichen Bereich der Kavitäten haften, welcher an einem Hubsystem befestigt ist.

EP1782936 wurde im Mai 2007 im Namen der Fa. Wilden Handels AG veröffentlicht. Die Publikation beschreibt eine Spritzgiessvorrichtung der eingangs beschrieben Art. Die mittlere Formhälfte besteht aus einem Unterteil und einem Oberteil, welche durch einen Schlitz voneinander getrennt sind. In diesem Schlitz ist ein Transfersystem angeordnet, welches zum Transfer der Teile von einer ersten in eine zweite Trennebene dient. Das Transfersystem dreht um eine einzige Achse. Über den Aufbau der Spritzgiessvorrichtung sind keine Details bekannt.

WO07082394 wurde im Juli 2007 im Namen der Fa. Foboha GmbH Formenbau publiziert. Die Publikation beschreibt ebenfalls eine Spritzgiessvorrichtung der eingangs erwähnten Art mit einer mittleren Formhälfte und einem formintegrierten Transfersystem. Die mittlere Formhälfte weist ein Unterteil und ein Oberteil auf, welche durch einen Schlitz voneinander getrennt sind. Das Transfersystem dreht um eine zentrisch angeordnete Drehachse. Bereiche der Kavitäten sind an radial verstellbaren Auslegerarmen befestigt, welche im Schlitz zwischen dem Unterteil und dem Oberteil angeordnet sind.

WO07085063 wurden im August 2007 im Namen der Fa. Boucherie NV G B veröffentlicht. Auch dieses Dokument befasst sich mit einer Spritzgiessvorrichtung der eingangs beschriebenen Gattung. Die in dieser Publikation beschriebene Vorrichtung ähnelt bezüglich dem Aufbau des Transfersystems stark der aus EP0070189. Beide weisen ein Transfersystem auf, welches unten und oben an der mittleren Formhälfte drehbar befestigt ist.

Die aus dem Stand der Technik bekannten Vorrichtungen weisen häufig Probleme mit der Medienführung (Luft, Wasser, Hydrauliköl, Daten) von und zur mittleren Formhälfte und der Flexibilität bezüglich des Drehsystems auf. Weiterhin weisen die aus dem Stand der Technik bekannten Vorrichtungen einen komplexen Aufbau auf, welcher insbesondere bei Wartungsarbeiten der Wirtschaftlichkeit entgegen wirkt.

Eine Aufgabe der Erfindung besteht darin, eine Spritzgiessvorrichtung der eingangs erwähnten Art zu zeigen, welche einen besonders einfachen und platzsparenden Aufbau und eine Maximierung der Anzahl Kavitäten ermöglicht.

Diese Aufgabe wird dadurch gelöst, dass im Unterschied zum Stand der Technik der Unterteil und der Oberteil der mittleren Formhälfte wie nachfolgend erläutert wird, nur bedingt miteinander wirkverbunden sind.

Eine erfindungsgemäss Spritzgiessvorrichtung weist in der Regel eine erste Formhälfte und eine gegenüber der ersten Formhälfte linear verschiebbare zweite Formhälfte auf. Bei Bedarf können die erste und/oder die zweite Formhälfte um eine weitere Achse horizontal oder vertikal gedreht werden. Z.B. kann es sich bei einer Formhälfte um einen Drehteller oder ein prismatischer Formträger mit Kavitäten auf mehreren Seitenflächen handeln, der z.B. um eine vertikale Achse drehbar angeordnet ist.

Zwischen der ersten und der zweiten Formhälfte ist eine dritte mittlere Formhälfte (Mittelteil) angeordnet. Die drei Formhälften sind linear zueinander in einer ersten Richtung verschiebbar angeordnet. Eine der drei Formhälften kann ortsfest angeordnet sein. Ein Koordinationsmechanismus kann bewirken, dass die dritte mittlere Formhälfte beim Öffnen und Schliessen der Spritzgiessvorrichtung mittig zwischen der ersten und der zweiten Formhälfte angeordnet ist.

Die erste und die dritte Formhälfte weisen erste und zweite Kavitätenhälften auf, die im Bereich einer ersten Trennebene zur Bildung von ersten Kavitäten in Schliessstellung der Spritzgiessvorrichtung zusammen wirken. Die zweite und die dritte Formhälfte weisen dritte und vierte Formhälften auf, welche im Bereich einer zweiten Trennebene zur Bildung von zweiten Kavitäten in Schliessstellung der Spritzgiessvorrichtung zusammenwirken. In der Regel sind pro Trennebene zur Steigerung der Effizienz mehrere Kavitäten vorhanden. Die Kavitätenhälften sind in der Regel mehrteilig aufgebaut. Pro Kavität ist in der Regel mindestens ein Bereich eines die Kavität bildenden Teils an einem Transfersystem beweglich angeordnet. Diese Träger dienen zum Transport von in der ersten Trennebene hergestellten Teilen in Kavitäten der zweiten Trennebene.

Das Transfersystem ist in die mittlere Formhälfte integriert. Mittels den Trägern werden z.B. in der ersten Trennebene hergestellte Spritzgiessteile bei geöffneter Spritzgiessvorrichtung aus den ersten Kavitäten herausgehoben, um die mittlere Formhälfte herum geschwenkt und dann in zweite Kavitäten im Bereich der zweiten Trennebene eingebracht, wo sie einem weiteren Bearbeitungsschritt unterzogen werden. Das Transfersystem weist radial verstellbare und um eine vertikale Achse drehbare Arme auf, an welchen die Träger peripher befestigt sind.

Die mittlere Formhälfte weist einen mehrteiligen Aufbau mit einem Oberteil und einem Unterteil auf, welche in der beschriebenen Ausführungsform keine starre Verbindung zueinander aufweisen. Der Oberteil und der Unterteil sind durch einen Schlitz voneinander getrennt. In diesem Schlitz sind die radial verstellbaren Arme des Transfersystem um eine erste Antriebswelle drehbar angeordnet. Die erste Antriebswelle befindet sich in einer Draufsicht mit Vorteil in etwa in der Mitte der mittleren Formhälfte. Sie ist sowohl im Oberteil als auch im Unterteil mittels Lagern in radialer und axialer Richtung gelagert und stellt zusammen mit den Lagern eine mechanische Verbindung zwischen dem Oberteil und dem Unterteil dar, welche mechanische Kräfte überträgt und den Oberteil gegenüber dem Unterteil positioniert.

Bei Bedarf kann die Welle im Innern hohl ausgestaltet sein und ein weiteres Element, z.B. eine zweite Antriebswelle umschliessen, welche koaxial zur ersten Antriebswelle angeordnet ist und zum Antreiben der in axialer Richtung verstellbaren Arme dient.

Die Stange kann wiederum hohl ausgestaltet sein und zur Übertragung von Medien der eingangs erwähnten Art dienen. Ein Vorteil besteht darin, dass nur ein Minimum an drehfesten Teilen notwendig ist und der Aufbau der mittleren Formhälfte im Vergleich zum Stand der Technik massiv vereinfacht werden kann.

In einer Ausführungsform betrifft die Erfindung eine Spritzgiessvorrichtung (Spritzgiesswerkzeug) mit einer ersten und einer zweiten Formhälfte, welche gegenüber der ersten Formhälfte in einer ersten Richtung linear verschiebbar angeordnet ist. Eine dritte Formhälfte ist zwischen der ersten und der zweiten Formhälfte angeordnet. Die dritte Formhälfte wirkt im Bereich einer ersten Trennebene mit der ersten Formhälfte zur Bildung von ersten Kavitäten und im Bereich einer zweiten Trennebene mit der zweiten Formhälfte zur Bildung von zweiten Kavitäten zusammen. Die dritte Formhälfte weist einen Oberteil und einen Unterteil auf, welche durch einen unlaufenden Schlitz voneinander beabstandet sind. Eine erste Antriebswelle ist im Innern der dritten Formhälfte angeordnet. An ihr ist mindestens ein Träger für ein Spritzgiessteil über einen Arm in radialer Richtung verstellbar angeordnet. Der mindestens eine Arm ist im Schlitz angeordnet. Der mindestens eine Träger befindet sich in der Regel ausserhalb des Schlitzes und wirkt von aussen mit den Kavitäten zusammen. Der Träger bildet in Schliessstellung in der Regel einen Teil einer Kavität. Die erste Antriebswelle ist sowohl gegenüber dem Oberteil als auch gegenüber dem Unterteil durch mindestens ein Lager abgestützt, bzw. gelagert. Sie dient einerseits zur Halterung des mindestens einen Armes. Andererseits dienst sie zum Zentrieren des Unterteils gegenüber dem Oberteil. Die erste Antriebswelle und die Lager bilden dabei die einzige direkte mechanische Verbindung zwischen dem Oberteil und dem Unterteil. Die erste Antriebswelle kann röhrenförmig hohl ausgestaltet sein. Bei Bedarf kann im Innern eine zweite Antriebswelle angeordnet sein, welche zum Antreiben der Arme, bzw. der Träger in radialer Richtung dient. Bei Bedarf kann auch die zweite Antriebswelle hohl ausgestaltet sein. Die erste und/oder die zweite Antriebswelle können zur Übertragung von Medien wie Kühlwasser, Hydrauliköl, Pressluft, Informationen dienen. Die erste Antriebswelle kann mit einem ersten Motor wirkverbunden sein, welcher am Oberteil befestigt ist. Die zweite Antriebswelle kann mit einem zweiten Motor wirkverbunden sein, welcher im Bereich eines Endes der ersten Antriebswelle angeordnet ist. Das Oberteil kann erste Linearführungen aufweisen, welche zur Abstützung des Oberteils an den Holmen einer Spritzgiessmaschine geeignet sind. Das Unterteil kann zweite Linearführungen aufweisen, welche zum Abstützen des Unterteils auf einem Maschinenbett und/oder an den Holmen einer Spritzgiessmaschine geeignet sind. Zumindest eine Kavität in einer der beiden Trennebenen kann Backen aufweisen, welche in seitlicher Richtung verschiebbar sind.

Anhand der in den nachfolgenden Figuren gezeigten Ausführungsbeispiele und der dazugehörigen Beschreibung werden Aspekte der Erfindung näher erläutert. Es zeigen:
- Fig. 1: eine Spritzgiessvorrichtung in perspektivischer Darstellung von schräg oben;
- Fig. 2: die Spritzgiessvorrichtung gemäss Figur 1 in einer Seitenansicht;
- Fig. 3: eine Schnittdarstellung entlang der Schnittlinie AA gemäss Figur 2.

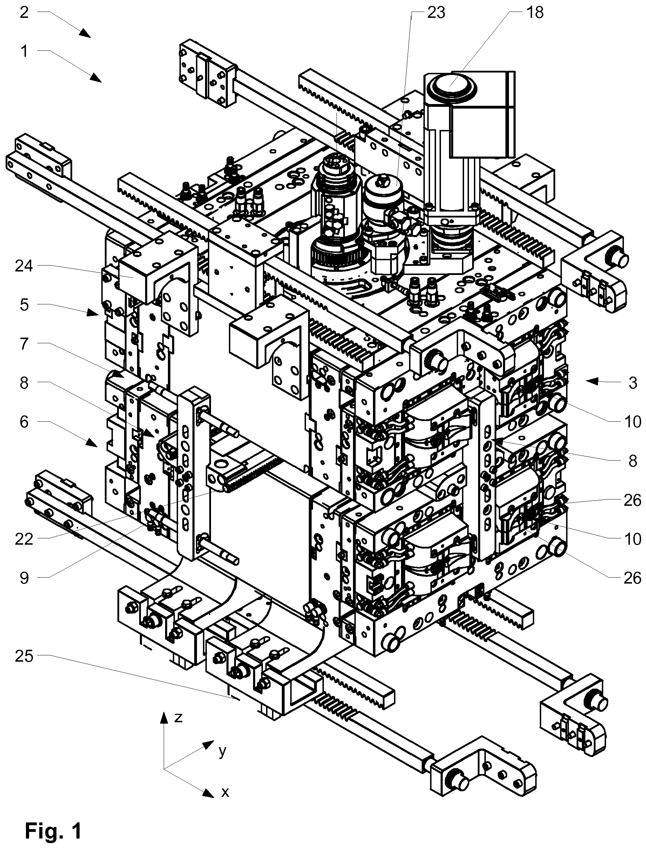

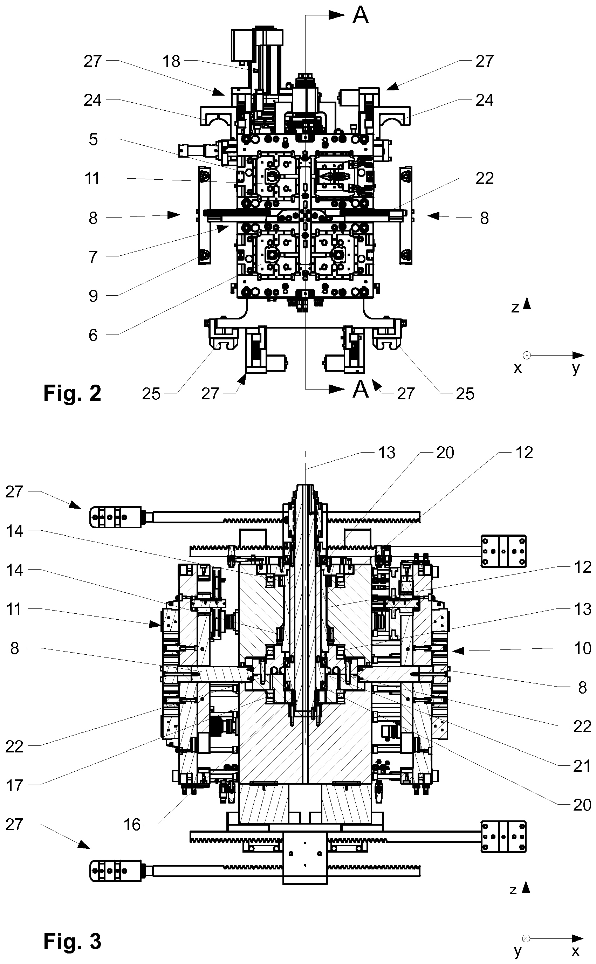

**Figur 1** zeigt eine mittlere dritte Formhälfte 1 einer erfindungsgemässen Spritzgiessvorrichtung 2 in einer perspektivischen Darstellung von schräg oben. **Figur 2** zeigt die dritte Formhälfte 1 in einer Seitenansicht und **Figur 3** zeigt eine Schnittdarstellung entlang der Schnittlinie AA gemäss **Figur 2****.**

Nicht dargestellt sind die erste und die zweite Formhälfte, welche ebenfalls Teil der Spritzgiessvorrichtung und mit Bezug zur x-Richtung (erste Richtung) auf gegenüberliegenden Seiten der dritten Formhälfte angeordnet und gegenüber dieser in der ersten Richtung verstellbar angeordnet sind. Die beiden aussen angeordneten Formhälften (erste und zweite) weisen einen konventionellen Aufbau auf und werden daher nicht im Detail erläutert. Sie wirken im Bereich einer ersten Trennebene mit einer ersten Seitenfläche 3 und im Bereich einer zweiten Trennebene mit einer zweiten Seitenfläche 4 der dritten Formhälfte 1 zusammen.

Die Spritzgiessvorrichtung 2 ist für die Wirkverbindung mit einer handelüblichen Spritzgiessmaschine vorgesehen. Dabei werden die erste und die zweite Formhälfte an den Werkzeugaufspannplatten der Spritzgiessmaschine befestigt. Die mittlere dritte Formhälfte wird auf dem Maschinenbett und/oder den Holmen der Spritzgiessmaschine (ebenfalls nicht näher dargestellt) gelagert.

Die dritte Formhälfte weist einen Oberteil 5 und einen Unterteil 6 auf, welche durch einen Schlitz 7 beabstandet zueinander angeordnet sind. Im Schlitz 7 sind hier vier sternförmig angeordnete Arme 8 zu erkennen, welche an ihren äusseren Enden einen oder mehrere Träger 9 aufweisen mittels denen eines oder mehrere Spritzgiessteile (nicht näher dargestellt) aus ersten Kavitäten 10 im Bereich der ersten Seitenfläche 3 in zweite Kavitäten 11 im Bereich der zweiten Trennebene transportiert werden können. Die Träger 9 sind in radialer Richtung verstellbar angeordnet. Zu diesem Zweck weisen die Arme 8 eine in radialer Richtung verstellbare Länge auf. Wie aus Figur 3 zu erkennen ist, sind die Arme 8 im Innern mit einer ersten Antriebswelle 12 wirkverbunden, bzw. werden durch diese gehalten. Die Antriebswelle 12 ist um eine Drehachse 13 drehbar gelagert.

In der gezeigten Ausführungsform ist die Antriebswelle 12 durch erste und zweite Lager 14, 15 in radialer Richtung und axialer Richtung gegenüber dem Oberteil 5 und durch dritte und vierte Lager 16, 17 in radialer und axialer Richtung gegenüber dem Unterteil 6 gelagert. Die erste Antriebswelle 12 stellt im Prinzip die einzige mechanische Verbindung zwischen dem Oberteil 5 und dem Unterteil 6 her, welche die beiden Teile massgeblich gegeneinander zentriert. Die erste Antriebswelle 12 ist im Unterteil 6 als Stummel ausgebildet. Im Oberteil erstreckt sich die Antriebswelle 12 bis zum oberen Ende des Oberteils 5, wo sie mit einem ersten Motor 18 wirkverbunden ist.

Die erste Antriebswelle 12 ist hohl ausgestaltet und weist im Innern eine zweite Antriebswelle 19 auf, welche hier koaxial zur ersten Antriebswelle 12 angeordnet und gegenüber dieser mittels fünften Lagern 20 drehbar gelagert ist. Die zweite Antriebswelle ist über ein Ritzel 21 mit Zahnstangen 22 der Arme 8 wirkverbunden und dient zum gleichzeitigen Verstellen der radialen Länge der Arme 8 gegenüber der Drehachse 13. Die zweite Antriebswelle ist mit einem zweiten Motor 23 wirkverbunden. Zum Transportieren von in der ersten Trennebene hergestellten Teilen wird die Spritzgiessvorrichtung entlang der ersten und der zweiten Trennebene geöffnet, danach tritt der zweite Motor 23 in Aktion und bewirkt, dass über die zweite Antriebswelle 19 die an den Armen 8 befestigten Träger 9 radial nach aussen bewegt werden. Danach tritt der erste Motor 18 in Aktion und dreht die erste Antriebswelle 12 um die Drehachse 13. Dadurch werden in den ersten Kavitäten 10 der ersten Trennebene hergestellte Teile (nicht ersichtlich) um den Oberteil 5, bzw. den Unterteil 6 herumgeschwenkt und in der zweiten Trennebene in eine Position oberhalb der zweiten Kavitäten 11 gebracht. Danach tritt der zweite Motor 23 wieder in Aktion und bewirkt durch Antreiben der zweiten Antriebswelle 19, dass die mit dem Ritzel 21 wirkverbundenen Zahnstangen 22 die Träger 9 wieder nach innen bewegen und die Teile aus der ersten Trennebene in die zweiten Kavitäten 11 der zweiten Trennebene abgesenkt werden, wo sie, nach Schliessen der Spritzgiessvorrichtung 2, einem weiteren Bearbeitungsvorgang unterzogen werden.

Der Oberteil 5 ist mittels ersten Linearführungen 24 an den oberen beiden Holmen einer Spritzgiessmaschine in der ersten Richtung verschiebbar abgestützt (beide nicht näher dargestellt). Der Unterteil 6 ist über zweite Linearführungen 25 auf dem Maschinenbett der Spritzgiessmaschine (beide nicht näher dargestellt) und/oder den unteren beiden Holmen der Spritzgiessmaschine in der ersten Richtung verschiebbar abgestützt.

Bei Bedarf weisen die ersten und/oder die zweiten Kavitäten 10, 11 seitlich in der ersten, bzw. der zweiten Seitenfläche 3, 4 verschiebbare Backen 26 auf, welche in ihrem Innern Formhohlräume bilden, in welche plastifiziertes Material eingespritzt wird. Die Backen 26 ermöglichen es, sehr komplexe Teile mit starken Hinterschnitten herzustellen.

**LISTE DER BEZUGSZEICHEN**

| | | | |
|---|---|---|---|
| 1 | dritte Formhälfte | 14 | Erste Lager |
| 2 | Spritzgiessvorrichtung (Spritzgiesswerkzeug) | 15 | Zweite Lager |
| | | 16 | Dritte Lager |
| 3 | Erste Seitenfläche | 17 | Vierte Lager |
| 4 | Zweite Seitenfläche | 18 | Erster Motor |
| 5 | Oberteil | 19 | Zweite Antriebswelle |
| 6 | Unterteil | 20 | Fünfte Lager |
| 7 | Schlitz | 21 | Ritzel |
| 8 | Arm | 22 | Zahnstange |
| 9 | Träger (für Spritzgiessteile) | 23 | Zweiter Motor |
| 10 | Erste Kavitäten | 24 | Erste Linearführungen |
| 11 | Zweite Kavitäten | 25 | Zweite Linearführungen |
| 12 | Erste Antriebswelle | 26 | Backen |
| 13 | Drehachse | 27 | Koordinationsmechanismus |

## Patentansprüche

1. Spritzgiessvorrichtung mit
a. einer ersten und einer zweiten Formhälfte, welche gegenüber der ersten Formhälfte in einer ersten Richtung linear verschiebbar angeordnet ist, sowie
b. einer dritten Formhälfte (1), welche zwischen der ersten und der zweiten Formhälfte angeordnet ist und im Bereich einer ersten Trennebene mit der ersten Formhälfte zur Bildung von ersten Kavitäten (10) und im Bereich einer zweiten Trennebene mit der zweiten Formhälfte zur Bildung von zweiten Kavitäten (11) zusammenwirkt, wobei
c. die dritte Formhälfte (1) einen Oberteil und einen Unterteil aufweist, welche durch einen Schlitz voneinander beabstandet sind,
**dadurch gekennzeichnet, dass**
d. eine erste Antriebswelle (12) im Innern der dritten Formhälfte angeordnet ist, wobei
e. an der Antriebswelle (12) mindestens ein Träger für ein Spritzgiessteil über einen Arm (8) in radialer Richtung verstellbar angeordnet ist, und wobei
f. die erste Antriebswelle (12) sowohl gegenüber dem Oberteil als auch gegenüber dem Unterteil durch mindestens ein Lager (14, 15, 16, 17) abgestützt ist, und dabei zum Zentrieren des Unterteils gegenüber dem Oberteil dient.

2. Spritzgiessvorrichtung gemäss Patentanspruch 1, **dadurch gekennzeichnet, dass** die erste Antriebswelle (12) über die Lager die einzige direkte mechanische Verbindung zwischen dem Oberteil und dem Unterteil darstellt.

3. Spritzgiessvorrichtung gemäss einem der vorangehenden Patentansprüche, **dadurch gekennzeichnet, dass** die erste Antriebswelle hohl ist und im Innern eine zweite Antriebswelle (19) angeordnet ist, welche zum Antreiben der Träger in radialer Richtung dient.

4. Spritzgiessvorrichtung gemäss Patentanspruch 3, **dadurch gekennzeichnet, dass** die zweite Antriebswelle hohl ist.

5. Spritzgiessvorrichtung gemäss einem der vorangehenden Patentansprüche, **dadurch gekennzeichnet, dass** die erste und/oder die zweite Antriebswelle zur Übertragung von Medien dient.

6. Spritzgiessvorrichtung gemäss einem der vorangehenden Patentansprüche, **dadurch gekennzeichnet, dass** die erste Antriebswelle mit einem ersten Motor wirkverbunden ist, welcher am Oberteil befestigt ist.

7. Spritzgiessvorrichtung gemäss einem der vorangehenden Patentansprüche, **dadurch gekennzeichnet, dass** die zweite Antriebswelle mit einem zweiten Motor wirkverbunden ist, welcher im Bereich eines Endes der ersten Antriebswelle angeordnet ist.

8. Spritzgiessvorrichtung gemäss einem der vorangehenden Patentansprüche, **dadurch gekennzeichnet, dass** das Oberteil erste Linearführungen aufweist, welche zur Abstützung des Oberteils an den Holmen einer Spritzgiessmaschine geeignet sind.

9. Spritzgiessvorrichtung gemäss einem der vorangehenden Patentansprüche, **dadurch gekennzeichnet, dass** das Unterteil zweite Linearführungen aufweist, welche zum Abstützen des Unterteils auf einem Maschinenbett und/oder an den Holmen einer Spritzgiessmaschine geeignet sind.

10. Spritzgiessvorrichtung gemäss einem der vorangehenden Patentansprüche, **dadurch gekennzeichnet, dass** die Kavitäten zumindest in einer Trennebene Backen aufweisen, welche in seitlicher Richtung verschiebbar sind.

## Claims

1. Injection-moulding device, comprising
a. a first mould half and a second mould half, which is arranged to be moveable linearly in a first direction with respect to the first mould half, and
b. a third mould half (1), which is arranged between the first mould half and the second mould half, and which interacts with the first mould half in the region of a first parting line in order to form first cavities (10), and which interacts with the second mould half in the region of a second parting line in order to form second cavities (11), wherein
c. the third mould half (1) has an upper part and a lower part spaced from each other by a slot,
**characterized in that**
d. a first drive shaft (12) is arranged in the interior of the third mould half, wherein
e. on the drive shaft (12), at least one carrier for an injection-moulded part is arranged adjustably in a radial direction via an arm (8), and wherein
f. the first drive shaft (12) is supported both with respect to the upper part and with respect to the lower part by at least one bearing (14, 15, 16, 17),
and is thereby provided for centring the lower part with respect to the upper part.

2. Injection-moulding device according to Claim 1, **characterized in that** the first drive shaft (12) constitutes, via the bearings, the only direct mechanical connection between the upper part and the lower part.

3. Injection-moulding device according to either of the preceding claims, **characterized in that** the first drive shaft is hollow and arranged in the interior is a second drive shaft (19) provided for driving the carriers in a radial direction.

4. Injection-moulding device according to Claim 3, **characterized in that** the second drive shaft is hollow.

5. Injection-moulding device according to one of the preceding claims, **characterized in that** the first drive shaft and/or the second drive shaft is provided for transferring media.

6. Injection-moulding device according to one of the preceding claims, **characterized in that** the first drive shaft is operatively connected to a first motor, which is fixed to the upper part.

7. Injection-moulding device according to one of the preceding claims, **characterized in that** the second drive shaft is operatively connected to a second motor, which is arranged in the region of an end of the first drive shaft.

8. Injection-moulding device according to one of the preceding claims, **characterized in that** the upper part comprises first linear guides, which are suitable for supporting the upper part on the tie bars of an injection-moulding machine.

9. Injection-moulding device according to one of the preceding claims, **characterized in that** the lower part comprises second linear guides, which are suitable for supporting the lower part on a machine bed and/or on the tie bars of an injection-moulding machine.

10. Injection-moulding device according to one of the preceding claims, **characterized in that** the cavities comprise, at least in a parting line, jaws which are displaceable in a lateral direction.

## Revendications

1. Dispositif de moulage par injection avec
a. une première moitié de moule et une deuxième moitié de moule, qui est disposée de façon déplaçable linéairement dans une première direction par rapport à la première moitié de moule, ainsi que
b. une troisième moitié de moule (1), qui est disposée entre la première moitié de moule et la deuxième moitié de moule et qui coopère dans la région d'un premier plan de joint avec la première moitié de moule pour former des premières cavités (10) et dans la région d'un deuxième plan de joint avec la deuxième moitié de moule pour former des deuxièmes cavités (11), dans lequel
c. la troisième moitié de moule (1) comprend une partie supérieure et une partie inférieure, qui sont espacées l'une de l'autre par une fente,
**caractérisé en ce que**
d. un premier arbre d'entraînement (12) est disposé à l'intérieur de la troisième moitié de moule, dans lequel
e. au moins un support pour une partie de moulage par injection est disposé sur l'arbre d'entraînement (12) d'une façon déplaçable en direction radiale au moyen d'un bras (8), et dans lequel
f. le premier arbre d'entraînement (12) est supporté par rapport à la partie supérieure et par rapport à la partie inférieure par au moins un palier (14, 15, 16, 17), et, par là, est fourni pour le centrage de la partie inférieure par rapport à la partie supérieure.

2. Dispositif de moulage par injection selon la revendication 1, **caractérisé en ce que** le premier arbre d'entraînement (12) représente par l'intermédiaire des paliers la seule liaison directe entre la partie supérieure et la partie inférieure.

3. Dispositif de moulage par injection selon l'une des revendications précédentes, **caractérisé en ce que** le premier arbre d'entraînement est creux et à l'intérieur il est disposé un deuxième arbre d'entraînement (19), qui est fourni pour l'entraînement des supports en direction radiale.

4. Dispositif de moulage par injection selon la revendication 3, **caractérisé en ce que** le deuxième arbre d'entraînement est creux.

5. Dispositif de moulage par injection selon l'une des revendications précédentes, **caractérisé en ce que** le premier et/ou le deuxième arbre d'entraînement est fourni pour la transmission des milieux.

6. Dispositif de moulage par injection selon l'une des revendications précédentes, **caractérisé en ce que** le premier arbre d'entraînement est relié fonctionnellement à un premier moteur, qui est fixé sur la partie supérieure.

7. Dispositif de moulage par injection selon l'une des revendications précédentes, **caractérisé en ce que** le deuxième arbre d'entraînement est relié fonctionnellement à un deuxième moteur, qui est disposé dans la région d'une extrémité du premier arbre d'entraînement.

8. Dispositif de moulage par injection selon l'une des revendications précédentes, **caractérisé en ce que** la partie supérieure présente des premiers guidages linéaires, qui sont appropriés pour supporter la partie supérieure sur des longerons d'une machine de moulage par injection.

9. Dispositif de moulage par injection selon l'une des revendications précédentes, **caractérisé en ce que** la partie inférieure présente des deuxièmes guidages linéaires, qui sont appropriés pour supporter la partie inférieure sur un sommier de machine et/ou sur les longerons d'une machine de moulage par injection.

10. Dispositif de moulage par injection selon l'une des revendications précédentes, **caractérisé en ce que** les cavités comprennent, au moins dans un plan de joint, des mâchoires déplaçables en direction latérale.
